# EUROPÄISCHE PATENTSCHRIFT

(11) **EP 2 406 120 B1**
(45) Veröffentlichungstag und Bekanntmachung des Hinweises auf die Patenterteilung: **03.04.2013**
(21) Anmeldenummer: 10718220.6
(22) Anmeldetag: 11.05.2010
(51) Int. Cl.: B62D 7/14, B62D 13/04, B62D 13/06, B62D 7/22, B62D 15/02, F16F 9/53, F16F 9/56, F16F 13/00

(54) **STABILISIERUNGSVORRICHTUNG FÜR NACHLAUFLENKACHSEN VON FAHRZEUGEN**
STABILISING DEVICE FOR SELF-STEERING AXLES OF VEHICLES
DISPOSITIF DE STABILISATION ESSIEUX AUTOVIREURS DES VÉHICULES

(30) Priorität: 19.05.2009 DE 102009003248
(43) Veröffentlichungstag der Anmeldung: 18.01.2012
(73) Patentinhaber: SAF-HOLLAND GmbH, 63856 Bessenbach (DE)
(72) Erfinder: BÜTTNER, Josef, 63857 Waldaschaff (DE); BÖHME, Lutz, 63877 Sailauf (DE)
(74) Vertreter: Müller Schupfner & Partner
(86) Internationale Anmeldenummer: PCT/EP2010/056498
(87) Internationale Veröffentlichungsnummer: WO 2010/133486

(56) Entgegenhaltungen:
- EP-A2- 0 845 403
- WO-A1-89/07065
- WO-A1-2008/040957
- DE-A1- 10 019 778
- DE-A1- 19 716 150
- DE-A1- 19 803 745
- DE-T2- 60 115 068
- DE-T2-602005 006 311

## Beschreibung

Die vorliegende Anmeldung bezieht sich auf eine Stabilisierungsvorrichtung für Achsen von Fahrzeugen, wie Kraftfahrzeugen, Anhängern, Sattelaufliegern oder dergleichen, nach dem Oberbegriff des Anspruchs 1. Ein ßeispiel einer solchen Stabilisierungsvorrichtung ist aus der WO 2008 040957 A1 bekannt.

Stabilisierungsvorrichtungen der in Rede stehenden Art sind aus dem Stand der Technik bekannt. Derartige Stabilisierungsvorrichtungen werden zwischen dem Achsenkörper und einem entsprechend den Rädern auslenkbaren Teil, beispielsweise einer Spurstange, vorgesehen. Eine derartige Stabilisierungsvorrichtung ist beispielsweise aus der DE 197 16 150 A1 bekannt. Während einer Kurvenfahrt oder eines Überholmanövers entsteht in der Reifenaufstandsfläche eine Seitenkraft. Diese Seitenkräfte (links und rechts) erzeugen ein Lenkmoment, welches auf den Lenkschenkel wirkt und diesen zu einer Winkelstellung zwingt. Für eine Synchrondrehbewegung zwischen dem linken und dem rechten Lenkschenkel ist eine Spurstange vorgesehen. Die Stabilisierungsvorrichtung wird hierbei auf der einen Seite am Achskörper und auf der anderen Seite an der Spurstange befestigt, wodurch eine Rückstellung der Räder in die Ursprungsposition bzw. Null-Stellung in einer gedämpften Art und Weise erfolgt. Sollte das Fahrzeug rückwärts bewegt werden, so ist es notwendig, die Räder in der Ursprungsposition festzulegen, wodurch im Stand der Technik pneumatische oder mechanische Rückfahrsperren zusätzlich verbaut werden. Problematisch bei derartigen Systemen ist jedoch, dass diese aus einer Vielzahl von Einzelbaugruppen bestehen, was zu einem hohen Bedarf an Bauraum und zu hohen Fertigungskosten führt.

Es ist somit Aufgabe der vorliegenden Erfindung, eine Stabilisierungsvorrichtung für Achsen von Fahrzeugen sowie eine Nachlauflenkachse von Fahrzeugen, wie Kraftfahrzeugen, Anhängern, Sattelaufliegern oder dergleichen, vorzusehen, welche flexibel gestaltet ist, die die Funktionen der Lenkstabilisierung und der Rückfahrsperre bzw. Lenksperre beigeringem Bauraumbedarf und geringen Fertigungskosten erfüllen können.

Diese Aufgabe wird durch eine Stabilisierungsvorrichtung für Achsen von Fahrzeugen, wie Kraftfahrzeugen, Anhängern, Sattelaufliegern oder dergleichen, mit den Merkmalen gemäß Anspruch 1 und durch eine Nachlauflenkachse von Fahrzeugen, wie Kraftfahrzeugen, Anhängern, Sattelaufliegern oder dergleichen, mit den Merkmalen des Anspruchs 15 gelöst. Bevorzugte Ausführungsformen ergeben sich aus den abhängigen Ansprüchen.

Erfindungsgemäß ist eine Stabilisierungsvorrichtung für Achsen von Fahrzeugen, wie Kraftfahrzeugen, Anhängern, Sattelaufliegern oder dergleichen, vorgesehen, umfassend eine Hohlzylindereinheit, die einen Hohlzylinder mit einem Fluid darin aufweist, eine Kolbeneinheit, die einen Kolben aufweist, welcher im Hohlzylinder angeordnet ist und diesen in zumindest zwei Kammern trennt, wobei die Kolbeneinheit in Bezug auf die Hohlzylindereinheit verschieblich ist, indem sie von einer Ursprungsposition in eine ausgelenkte Position verlagerbar ist, eine Vorspanneinrichtung, welche die Kolbeneinheit in Richtung der Ursprungsposition spannt, und eine Steuer- bzw. Regeleinrichtung, welche den Fluidfluß in die Ausdehnkammern steuert bzw. regelt. Die Stabilisierungsvorrichtung ist insbesondere vorgesehen, um während des Fahrbetriebs eine Lenkstabilisierung zu gewährleisten. Während einer Kurvenfahrt oder eines Überholmanövers entsteht in der Reifenaufstandsfläche eine Seitenkraft. Mittels der Lenkstabilisierung wird die Stabilisierungsvorrichtung bei Kurvenfahrt in die eine und die andere Richtung jeweils symmetrisch beansprucht und dadurch bei Kurvenfahrt immer eine entsprechende, entgegen der Auslenkrichtung wirkende Rückstellkraft erzeugt. Hierdurch wird mit einfachen baulichen und verschleißarmen Maßnahmen eine zuverlässige, definierte Zentrierung in Geradeausfahrtrichtung erzielt. Die Stabilisierungsvorrichtung besteht zweckmäßigerweise aus einer Hohlzylindereinheit, welche mit einem Hohlzylinder ausgestattet ist. In dem Hohlzylinder ist ein Fluid vorgesehen, beispielsweise ein Gas oder ein Liquid. Besonders vorteilhafterweise ist das Fluid des Hohlzylinders eine Hydraulikflüssigkeit, wie ein Hydrauliköl. Ferner weist die Stabilisierungsvorrichtung eine Kolbeneinheit auf, die einen Kolben umfasst, der im Hohlzylinder aufgenommen ist. Der Kolben weist eine derartige geometrische Konfiguration auf, dass dessen Querschnitt im Wesentlichen dem inneren Querschnitt des Hohlzylinders entspricht und diesen in zumindest zwei Kammern trennt. Hierbei ist die Kolbeneinheit in Bezug auf die Hohlzylindereinheit entlang einer Längsachse bzw. Längserstreckung der Stabilisierungsvorrichtung verschieblich, indem sie von einer Ursprungsposition bzw. mittigen Position bzw. Null-Stellung in eine.ausgelenkte Position verlagerbar ist. Während dieser Verlagerung erfolgt ein Fluidfluss in der anderen Kammer aufgrund der Bewegung des Kolbens. Hierfür weist entweder der Kolben eine Ventileinrichtung und/oder der Hohlzylinder eine entsprechende Ventileinrichtung für den Fluidaustausch auf. Erfindungsgemäß weist die Stabilisierungsvorrichtung eine Vorspanneinrichtung auf, welche die Kolbeneinheit in Richtung der Ursprungsposition spannt. Mittels der Vorspanneinrichtung wird somit über die Hohlzylindereinheit oder Kolbeneinheit auf den auslenkbaren Teil der Achse ein Rückstellmoment ausgeübt, welches bewirkt, dass die Räder der Achse sich in Richtung der Ursprungsposition bzw. Geradeausrichtung zurück verlangern. Zweckmäßigerweise ist eine Steuer- bzw. Regeleinrichtung vorgesehen, welche den Fluidfluss in die/aus den Kammern steuert bzw. regelt. Mittels der Steuer- bzw. Regeleinrichtung ist es insbesondere möglich, den Fluidfluss zu ermöglichen oder zu blockieren, sowie vorzugsweise die Geschwindigkeit und/oder Menge des Fluidflusses zu steuern bzw. zu regeln. Hierdurch ist es vorteilhafterweise möglich, die erfindungsgemäße Stabilisierungsvorrichtung nicht nur als Lenkstabilisierungsvorrichtung zu verwenden, sondern ebenfalls als Rückfahr- bzw. Lenksperre, da durch die Blockierung des Fluidflusses die Position bzw. der Einschlagwinkel der Räder festgelegt bzw. festgesetzt werden kann.

Vorteilhafterweise umfasst die ausgelenkte Position eine eingeschobene und eine ausgezogene Position. In anderen Worten führt die Verlagerung der Kolbeneinheit in Bezug auf die Hohlzylindereinheit von der Ursprungsposition in die ausgelenkte Position zu einer Veränderung der Länge der Stabilisierungsrichtung bzw. zu einer Veränderung des Abstands der äußeren Enden der Stabilisierungsvorrichtung. In der eingeschobenen Position weist die Stabilisierungsvorrichtung - in Längsrichtung gesehen - eine kürzere Länge als in der Ursprungsposition und in der ausgezogenen Position eine größere Länge als in der Ursprungsposition auf.

Erfindungsgemäß weist die Stabilisierungsvorrichtung weiterhin eine Sensoreinrichtung auf, welche die Position der Kolbeneinheit erfasst. Insbesondere ist die Sensoreinrichtung vorgesehen, um zu detektieren bzw. zu erfassen, ob sich die Kolbeneinheit in Bezug auf die Hohlzylindereinheit in der Ursprungsposition befindet. Hierbei erfasst die Sensoreinrichtung besonders zweckmäßigerweise die Position eines aus dem Hohlzylinder herausragenden Bereichs einer Kolbenstange der Kolbeneinheit. Die Sensoreinrichtung ist zweckmäßigerweise derart ausgebildet, dass diese zwei Zustände erfasst bzw. zwischen zwei Zuständen unterscheidet, nämlich der Position der Kolbeneinheit in der Ursprungsposition und einer hiervon ausgelenkten Position. In einer bevorzugten Ausführungsform kann die Sensoreinrichtung auch den Grad der Auslenkung, d. h. der Verlagerung der Kolbeneinheit weg von der Ursprungsposition, erfassen.

Erfindungsgemäß weist die Steuer- bzw. Regeleinrichtung eine Ventilanordnung auf, mittels welcher der Fluidfluß in die/aus den Kammern zugelassen oder verhindert werden kann. Die Ventilanordnung ist somit vorteilhafterweise ausgebildet, den Fluidfluß in Abhängigkeit eines Signals von der Steuer- bzw. Regeleinrichtung zu blockieren oder zu ermöglichen. Hierbei kann die Ventilanordnung in oder an dem Kolben der Kolbeneinheit vorgesehen sein. Besonders vorteilhafterweise ist die Ventilanordnung jedoch am Hohlzylinder der Hohlzylindereinheit ausgebildet und regelt bzw. steuert den Fluidfluß in und aus den Kammern.

Erfindungsgemäß ist die Steuer- bzw. Regeleinrichtung ausgebildet, den Fluidfluß in die/aus den Kammern nur zu verhindern, wenn die Sensoreinrichtung die Ursprungsposition der Kolbeneinheit erfasst. Die Steuer- bzw. Regeleinrichtung weist somit ein Regelelement auf, welches den Fluidfluss in und aus den Kammern dann blockiert, wenn die Sensoreinrichtung die Lage der Kolbeneinheit in der Ursprungsposition detektiert. Hiermit wird sichergestellt, dass der Fluidfluss nur blockiert ist, wenn die Räder der Fahrzeuge in der Null-Stellung ausgerichtet sind. Hierdurch wird ein sicheres Zurücksetzen des Fahrzeugs gewährleistet, da die Stabilisierungsvorrichtung in diesem Falle als Lenk- bzw. Rückfahrsperre dient. Die Sensoreinrichtung kann die Ursprungsposition der Kolbeneinheit mittelbar oder unmittelbar bzw. direkt erfassen. Die mittelbare Erfassung der Ursprungsposition der Kolbeneinheit kann beispielsweise über die Erfassung der Null-Stellung der Vorspanneinrichtung, beispielsweise der Ursprungsposition von erstem und zweitem Halteelement erfolgen. In der Ursprungsposition der Kolbeneinheit wird der Fluidfluss in die/aus den Kammern nicht zwangsweise verhindert, sondern lediglich dann, wenn die Steuer- bzw. Regeleinrichtung ein entsprechendes Signal an die Ventilanordnung überträgt. Die Steuer- bzw. Regeleinrichtung bzw. deren Regelelement ist somit derart ausgebildet, dass ein entsprechendes Signal nur dann an die Ventilanordnung übertragen werden kann, wenn die Sensoreinrichtung die Ursprungsposition der Kolbeneinheit erfasst. In der Regel erfolgt die Signalgebung des Regelelements der Steuer- bzw. Regeleinrichtung nur dann, wenn das Fahrzeug in eine Rückwärtsbewegung versetzt wird.

In einer bevorzugten Ausführungsform weist die Steuer- bzw. Regeleinrichtung eine Fluidpumpe auf, die ausgelegt ist, wahlweise einer der Kammern Fluid zuzuführen, um die Kolbeneinheit in eine vorgegebene Position zu verlagern. Hierdurch wird eine Position der Kolbeneinheit und somit eine Winkelstellung der Räder des Fahrzeugs determiniert bzw. festgelegt bzw. eingestellt, so dass die Stabilisierungsvorrichtung in einer bevorzugten Ausführungsform als Lenkung wirken kann. Vorteilhafterweise erfüllt die Stabilisierungsvorrichtung somit zum Einen die Funktion einer Lenkstabilisierung, zum Anderen die Funktion einer Lenksperre beim Rückwärtsbewegen des Fahrzeugs und zum Dritten die Funktion einer (Aktiv-) Lenkung im Fahrbetrieb des Fahrzeugs. Anders als bei aus dem Stand der Technik bekannten Systemen, bei welchen die Funktion der Lenkstabilisierung und die Funktion der (Aktiv-) Lenkung im Fahrbetrieb des Fahrzeugs von separaten, getrennten Systemen erfüllt werden, ist bei der bevorzugten Ausführungsform der Stabilisierungsvorrichtung die Funktion einer Lenkstabilisierung und der (Aktiv-) Lenkung im Fahrbetrieb des Fahrzeugs in einer einzigen bzw. integralen Baueinheit verwirklicht.

Vorteilhafterweise ist die Sensoreinrichtung ausgelegt, die Null-Stellung der Vorspanneinrichtung zu erfassen. In anderen Worten kann die Sensoreinrichtung einen oder mehrere Sensoren aufweisen, welche ausgelegt sind, die Position und/oder den Zustand der Vorspanneinrichtung zu erfassen. Die Null-Stellung der Vorspanneinrichtung ist hiermit derjenige Zustand, in welchem die Vorspanneinrichtung am wenigsten belastet ist. Bei einer Bewegung der Kolbeneinheit in Bezug auf die Hohlzylindereinheit wird die Vorspanneinrichtung in einer besonders bevorzugten Ausführungsform von einem ersten und zweiten Halteelement verspannt bzw. unter Spannung gesetzt. Bei einer derartigen Ausführungsform kann der oder die Sensoren der Sensoreinrichtung ebenfalls die Ursprungsposition von erstem und zweitem Halteelement erfassen.

In einer bevorzugten Ausführungsform weist die Vorspanneinrichtung ein Federelement auf, welches vorzugsweise als Schraubenfeder ausgebildet ist. Die Vorspanneinrichtung kann somit zweckmäßigerweise als elastisches Element ausgebildet sein. Hierfür eignen sich insbesondere eine Gasfeder oder ein Gummielement. Besonders zweckmäßigerweise ist die Vorspanneinrichtung jedoch als Torsions- oder Schraubenfeder ausgebildet. Besonders vorteilhafterweise ist die Vorspanneinrichtung bzw. das Federelement konzentrisch bzw. koaxial zu der Hohlzylindereinheit bzw. dem Hohlzylinder ausgebildet. Hierbei können das Federelement und der Hohlzylinder sich in Längsrichtung gesehen ganz oder teilweise überlappen, wobei das Federelement den Hohlzylinder umgibt. Alternativ können Federelement und Hohlzylinder voneinander beabstandet sein oder sich aneinander anschließen, nicht jedoch überlappen.

Zweckmäßigerweise wird das Federelement in jeder der ausgelenkten Positionen auf Druck beansprucht. In anderen Worten vergrößert sich die Druckbeanspruchung der Federelemente bei Bewegung der Kolbeneinheit von der Ursprungsposition in eine ausgelenkte Position sowohl in Richtung der eingeschobenen als auch in Richtung der ausgezogenen Position.

Vorteilhafterweise ist in der eingeschobenen Position die Lage eines ersten Endes des Federelements in Bezug auf die Hohlzylindereinheit und in der ausgezogenen Position die Lage eines zweiten Endes des Federelements in Bezug auf die Hohlzylindereinheit verlagert. In anderen Worten verbleibt jeweils bei Verlagerung des einen Endes des Federelements das andere Ende des Federelements ortsfest in Bezug auf die Hohlzylindereinheit. Die Verlagerung erfolgt hierbei entlang der Längsachse der Stabilisierungsvorrichtung und zweckmässigerweise zum anderen Ende des Federelements hin, da das Federelement vorzugsweise auf Druck beansprucht wird. Besonders bevorzugt wird bei Verlagerung der Kolbeneinheit in Richtung der eingeschobenen Position das dem freien Ende der Kolbeneinheit zugewandte Ende des Federelements verlagert und bei einer Verlagerung der Kolbeneinheit in Richtung der ausgezogenen Position das dem freien Ende der Kolbeneinheit gegenüberliegende Ende des Federelements.

Vorzugsweise weist die Kolbeneinheit eine Kolbenstange auf, an welcher der Kolben angeordnet ist, und welcher aus dem Hohlzylinder zumindest einseitig herausragt. Der Kolben ist hierbei zweckmäßigerweise ortsfest an der Kolbenstange angeordnet bzw. befestigt. Vorzugsweise ragt die Kolbenstange an einer Stirnseite der Hohlzylindereinheit bzw. des Hohlzylinders in axialer Richtung, vorzugsweise koaxial oder konzentrisch, heraus. In einer bevorzugten Ausführungsform kann die Kolbenstange auch an zwei gegenüberliegenden Stirnseiten des Hohlzylinders aus diesem herausragen, wobei sich an einer Seite bzw. an einem ersten Ende der Kolbenstange ein Befestigungsbereich für ein Fahrwerkselement des Fahrzeugs befindet, und an dem gegenüberliegenden zweiten Ende der Kolbenstange ein im Folgenden beschriebener Halteabschnitt vorgesehen sein kann.

Zweckmässigerweise ist an dem herausragenden Abschnitt der Kolbenstange ein Halteabschnitt vorgesehen, welcher ausgelegt ist, bei Verlagerung der Kolbeneinheit in Richtung der eingeschobenen Position mit einem ersten, mit der Vorspanneinrichtung in Eingriff stehenden, Halteelement und bei Verlagerung der Kolbeneinheit in Richtung der ausgezogenen Position mit einem zweiten, mit der Vorspanneinrichtung in Eingriff stehenden, Halteelement zusammenzuwirken. Der Halteabschnitt kann vorteilhafterweise in einem zwischen dem Kolben und dem ersten Ende bzw. freien Ende der Kolbenstange vorgesehenen Bereich außerhalb des Hohlzylinders vorgesehen sein. In einer bevorzugten Ausführungsform jedoch ragt ein dem ersten Ende gegenüberliegendes zweites Ende der Kolbenstange aus dem Hohlzylinder heraus, an welchem der Halteabschnitt vorgesehen sein kann. Das erste und zweite Halteelement sind im Wesentlichen klammerartig ausgebildet, wobei zwischen diesen die Vorspanneinrichtung mit einer gewissen Grundspannung verspannt ist. Bei einer Verlagerung der Kolbeneinheit bzw. deren Halteabschnitt verlagert sich das eine Halteelement in Bezug auf das andere Halteelement entlang der Längsachse der Stabilisierungsvorrichtung, so dass die Vorspanneinrichtung bzw. das Federelement weiter zusammengedrückt wird. In dem verlagerten Zustand steht der Halteabschnitt nur mit einem der Halteelemente in Eingriff, wobei ein Eingriff mit dem verbleibenden Halteelement nicht gegeben ist. Ein beidseitiger Eingriff, d. h. ein Eingriff beider Halteelemente mit dem Halteabschnitt, ist nur in der Ursprungsposition der Kolbeneinheit gegeben.

In einer bevorzugten Ausführungsform weist die Hohlzylindereinheit ein Gehäuse auf, in welchem die Vorspanneinrichtung aufgenommen ist und welches vorzugsweise koaxial zum Hohlzylinder angeordnet ist. Das Gehäuse kann einstückig mit dem Hohlzylinder ausgebildet sein, oder mehrteilig und fest mit dem Hohlzylinder verbunden sein. Vorzugsweise kann das Gehäuse an der dem ersten freien Ende der Kolbenstange zugewandten Stirnseite angeordnet sein. Besonders vorteilhafterweise ist das Gehäuse jedoch an der dem freien Ende der Kolbenstange abgewandten Seite des Hohlzylinders angeordnet, wobei ein Befestigungsabschnitt der Hohlzylindereinheit an einem Fahrwerkselement des Fahrzeugs an der freien Stirnseite des Gehäuses vorgesehen ist.

Vorzugsweise überlappen sich das Gehäuse und der Hohlzylinder zumindest teilweise. In anderen Worten kann das Gehäuse den Hohlzylinder zumindest teilweise umschließen bzw. umgeben bzw. ummanteln. Das Federelement ist hierbei zweckmäßigerweise zwischen dem Gehäuse und dem Hohlzylinder angeordnet. Bei einer Überlappung zwischen Gehäuse und Hohlzylinder ist es möglich, die Länge des Federelements entsprechend der Länge der Überlappung zu vergrößern. Hierdurch wird die Bereitstellung eines Federelementes mit einer besonders vorteilhaften Federkennlinie ermöglicht.

Weiterhin erfindungsgemäß ist eine Nachlauflenkachse von Fahrzeugen, wie Kraftfahrzeugen, Anhängern, Sattelaufliegern oder dergleichen, vorgesehen, umfassend einen Achskörper, an dessen Enden Räder anordenbar sind, eine Spurstange, über welche die Lenkgabeln anlenkbar sind, und eine Stabilisierungsvorrichtung nach Anspruch 1, welche zwischen dem Achskörper und einem entsprechend den Rädern auslenkbaren Teil, wie der Spurstange, wirksam ist.

Die weiteren vorteilhaften und bevorzugten Merkmale der erfindungsgemäßen Stabilisierungsvorrichtung können ebenfalls in der erfindungsgemäßen Nachlauflenkachse Anwendung finden.

Weitere Vorteile und Merkmale der Erfindung ergeben sich aus der nachfolgenden Beschreibung von bevorzugten Ausführungsformen mit Bezug auf die beigefügten Figuren, wobei einzelne Merkmale von einzelnen Ausführungsformen zu neuen Ausführungsformen kombiniert werden können. Es zeigen:
- **Figur 1**: eine Draufsicht einer Ausführungsform der erfindungsgemäßen Nachlauflenkachse,
- **Figur 2**: Querschnittsansichten einer erstbevorzugten Ausführungsform der erfindungsgemäßen Stabilisierungsvorrichtung in drei Positionen,
- **Figur 3**: eine Querschnittsansicht einer weiteren bevorzugten Ausführungsform der erfindungsgemäßen Stabilisierungsvorrichtung,
- **Figur 4**: Schaltungsdiagramme einer bevorzugten Ausführungsform der erfindungsgemäßen Regeleinrichtung,
- **Figur 5**: eine Querschnittsansicht einer weiteren bevorzugten Ausführungsform der erfindungsgemäßen Stabilisierungsvorrichtung,
- **Figur 6**: eine Querschnittsansicht einer weiteren bevorzugten Ausführungsform der erfindungsgemäßen Stabilisierungsvorrichtung,
- **Figur 7**: eine Querschnittsansicht einer weiteren bevorzugten Ausführungsform der erfindungsgemäßen Stabilisierungsvorrichtung,
- **Figur 8**: zwei Querschnittsansichten einer bevorzugten Ausführungsform einer erfindungsgemäßen Hohlzylindereinheit.

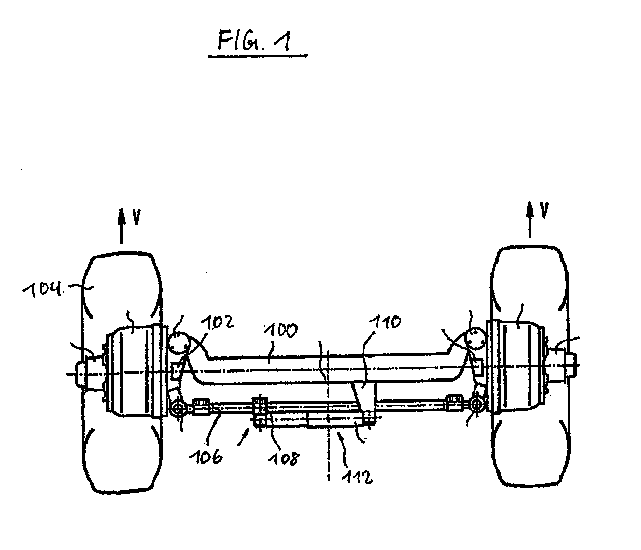

In Figur 1 ist eine Draufsicht der bevorzugten Ausführungsform der erfindungsgemäßen Nachlauflenkachse dargestellt. Die Nachlauflenkachse weist einen Achskörper 100 auf, welcher sich im Wesentlichen quer zur Fahrtrichtung erstreckt. Gelenkig an dem Achskörper 100 sind Lenkgabeln 102 angeordnet, welche die Räder 104 tragen. Wie ersichtlich, ist der Achskörper 100 an beiden Enden in Vorwärtsfahrtrichtung V gekröpft. Die Lenkgabeln 102 sind zur Gewährleistung der Parallelstellung der Räder 104 über eine Gelenkverbindung mit einer Spurstange 106 verbunden. An der Spurstange 106 ist ein erstes Anschlusselement 108 und an dem Achskörper 100 ist ein zweites Anschlusselement 110 vorgesehen, zwischen welchen eine Stabilisierungsvorrichtung 112 zur Lenkstabilisierung angeordnet ist. Die Stabilisierungsvorrichtung 112 wirkt - wie ersichtlich - im Wesentlichen in Längsrichtung des Achskörpers 100.

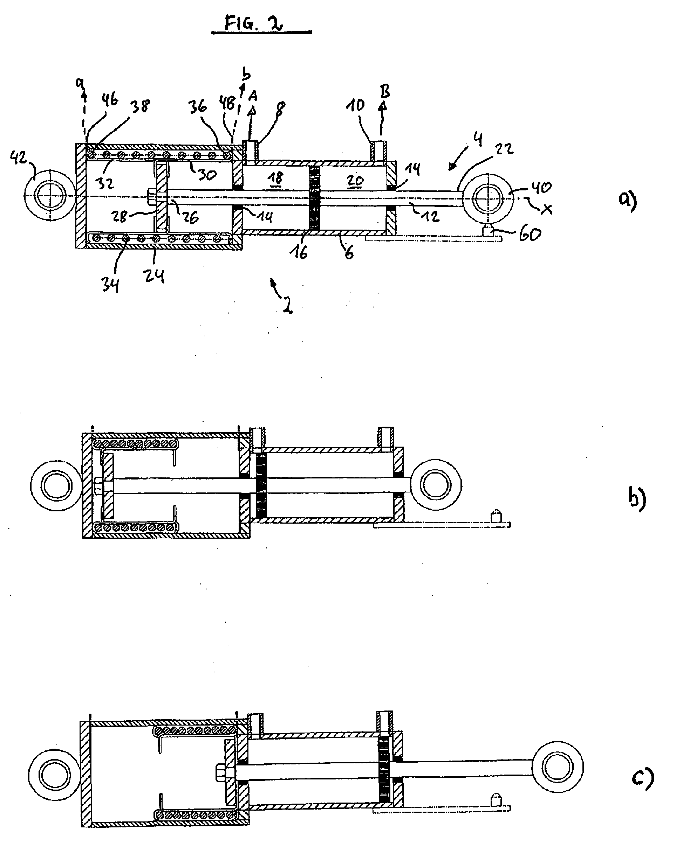

In Figur 2 ist eine bevorzugte beispielhafte Ausführungsform der erfindungsgemäßen Stabilisierungsvorrichtung dargestellt. Die Stabilisierungsvorrichtung weist eine Hohlzylindereinheit 2 und eine Kolbeneinheit 4 auf.

Die Hohlzylindereinheit 2 umfaßt einen Hohlzylinder 6, der mit einem Fluid befüllt ist. An den beiden distalen Enden des Hohlzylinders 6 weist dieser einen Fluidanschluss 8 und einen zweiten Fluidanschluss 10 auf, über welchen dem Inneren des Hohlzylinders 6 Fluid zuführ- und abführbar ist.

Die Kolbeneinheit 4 weist eine Kolbenstange 12 auf, welche sich durch die Stirnwandungen des Hohlzylinders, abgedichtet durch Dichtungen 14, hindurch erstreckt. Im Inneren des Hohlzylinders 6 weist die Kolbenstange 12 einen Kolben 16 auf, dessen Querschnitt im Wesentlichen dem Hohlraumquerschnitt des Hohlzylinders 6 entspricht. Infolgedessen trennt der Kolben 16 den Innenraum des Hohlzylinders 6 in eine erste Kammer 18 und eine zweite Kammer 20 auf, welche zweckmäßigerweise fluiddicht voneinander getrennt sind.

An einer dem freien bzw. ersten Ende 22 der Kolbenstange 12 gegenüberliegenden Stirnseite des Hohlzylinders 6 ist ein Gehäuse 24 angeordnet, in welches sich das zweite Ende 26 der Kolbenstange 12 hinein erstreckt. Am zweiten Ende 26 ist ein zweckmäßigerweise platten- oder scheibenförmiger Halteabschnitt 28 vorgesehen, an welchem ein erstes Halteelement 30 und ein zweites Halteelement 32 über die als Federelement 34 ausgebildete Vorspanneinrichtung verspannt ist.

Die Halteelemente 30, 32 sind vorteilhafterweise als Blech-Arme ausgebildet und über den Innenumfang des Federelements 34 alternierend verteilt. Hierbei greift ein erstes Ende 36 des Federelements 34 mit dem ersten Halteelement 30 ein und ein zweites Ende 38 steht in Eingriff mit dem zweiten Halteelement 32.

Über ein erstes Befestigungselement 40 ist die Stabilisierungsvorrichtung 112 mit dem ersten Anschlusselement 108 der Spurstange 106 verbunden. Über ein zweites Befestigungselement 42 ist die Hohlzylindereinheit 2 der Stabilisierungsvorrichtung 112 mit einem zweiten Anschlusselement 110 des Achskörpers 100 verbunden. Bei Belastung, beispielsweise bei Kurvenfahrt, wird über die Spurstange 106 auf die Kolbeneinheit 4 eine Kraft ausgeübt, so dass sich die Kolbeneinheit 4 der in Figur 2a dargestellten Ursprungsposition in eine ausgelenkte Position in Richtung der Längsachse X verlagert. Die ausgelenkte Position kann hierbei eine eingeschobene Position (Figur 2b) oder eine ausgezogene Position (Figur 2c) sein.

In der in Figur 2b dargestellten eingeschobenen Position gelangt der Halteabschnitt 28 der Kolbeneinheit 4 außer Eingriff mit dem zweiten Halteelement 32, da er sich in Richtung des zweiten Befestigungselements 42 verschiebt und aufgrund des Eingriffs mit dem ersten Halteelement 30 das Federelement 34 komprimiert. Entsprechend gelangt der Halteabschnitt 28 bei einer Verlagerung der Kolbeneinheit 4 in Richtung der in der Figur 2c dargestellten ausgezogenen Position mit dem ersten Halteelement 30 außer Eingriff, während über einen Eingriff mit dem zweiten Halteelement 32 das zweite Ende 38 des Federelements 34 in Richtung weg vom zweiten Befestigungselement 42 bewegt und das Federelements 34 somit komprimiert wird.

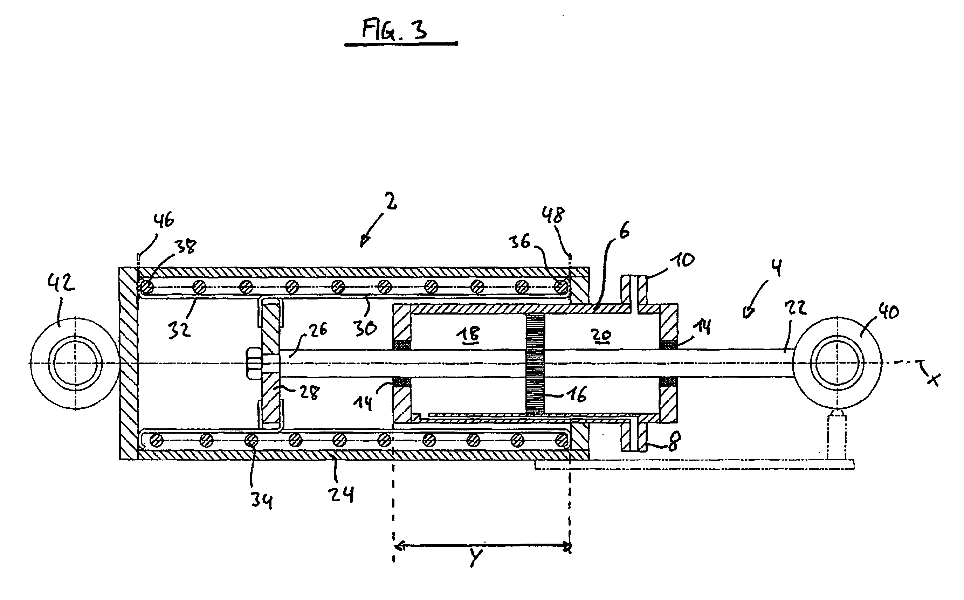

In Figur 3 ist eine weitere, beispielhafte Form der erfindungsgemäßen Stabilisierungsvorrichtung dargestellt. Diese unterscheidet sich insbesondere von der in Figur 2 dargestellten Ausführungsform dahingehend, dass sich das Gehäuse 24 und der Hohlzylinder 6 der Hohlzylindereinheit 2 über die Längserstreckung y überlappen. Hierdurch ist es möglich, die Länge des Federelements 34 um die Längserstreckung y zu erweitern, so dass sich aufgrund der besseren Federkennlinie ein optimierter Kraft-Weg-Verlauf des Federelements 34 ergibt. Im Übrigen ist es hierdurch möglich, eine kompaktere Bauform zu gewährleisten.

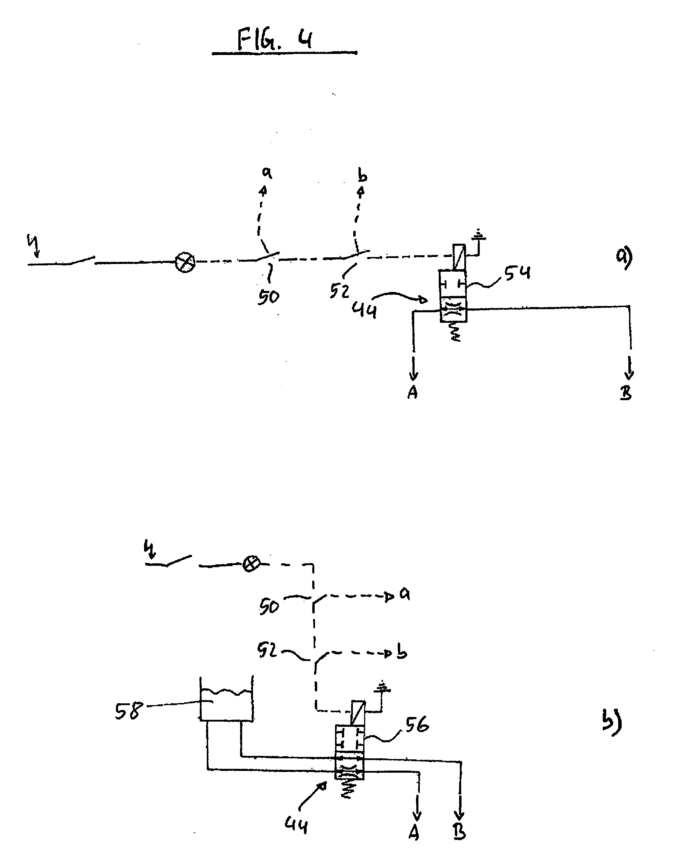

In den Figuren 4a und 4b sind Schaltungsdiagramme einer beispielhaften Steuer- bzw. Regeleinrichtung dargestellt. Hierbei ist zwischen dem ersten Fluidanschluss 8 und dem zweiten Fluidanschluss 10 eine Ventilanordnung 44 vorgesehen, mittels welcher der Fluidfluss in die und aus den Kammern 18, 20 zugelassen oder blockiert werden kann. Die Blockade ist jedoch nur dann möglich, wenn die Sensoreinrichtung die Ursprungsposition der Kolbeneinheit 4 erfasst. Hierfür weist die Sensoreinrichtung einen ersten Kontaktsensor 46 und einen zweiten Kontaktsensor 48 auf, welche an gegenüberliegenden inneren Stirnflächen des Gehäuses 24 vorgesehen sind. Nur wenn sowohl das erste Halteelement 30 als auch das zweite Halteelement 32 Kontakt zu den inneren Stirnflächen des Gehäuses 24 haben, werden entsprechende Schalter 50 und 52 der Steuer- bzw. Regeleinrichtung geschlossen, wodurch sich ein Ventil der Ventilanordnung 44 schließt und einen Fluidfluss zwischen der ersten Kammer 18 und der zweiten Kammer 20 unterbindet. Infolgedessen wird die Lage der Kolbeneinheit 4 festgesetzt. Die Ventilanordnung 44 kann entweder als Zweiwegeventil 54 (Figur 4a) oder als Vierwegeventil 56 (Figur 4b) ausgebildet sein. Durch das Vierwegeventil 56 kann dem Fluidkreislauf zusätzlich ein Fluidausgleichsbehälter 58 zugeschalten werden, um bei eventuell defekten Dichtungen 14 Luft im Fluidkreislauf bzw. in den Kammern 18, 20 zu vermeiden.

Zusätzlich oder in einer Alternative zu dem ersten Kontaktsensor 46 und dem zweiten Kontaktsensor 48 kann ein dritter Kontaktsensor 60 vorgesehen sein, welcher erfasst, ob sich das erste Ende 22 der Kolbeneinheit 4 in der Ursprungsposition befindet. Wenn dies der Fall ist, tritt der dritte Kontaktsensor 60 mit der Ventilanordnung 44 in Verbindung und ermöglicht eine Blockade des Fluidflusses in die/aus den Kammern 18, 20.

Zusätzlich kann die Steuer- bzw. Regeleinrichtung eine Fluidpumpe aufweisen, die an den ersten Fluidanschluss 8 und/oder den zweiten Fluidanschluss 10 angeschlossen ist und mittels welcher der Kolben 16 und somit die Kolbeneinheit 4 in eine vorgegebene Position verlagerbar sind. Hierdurch ist es möglich, die Spurstange 106 bewußt in eine Richtung zu bewegen und somit eine aktive Lenkung der Räder 104 zu ermöglichen.

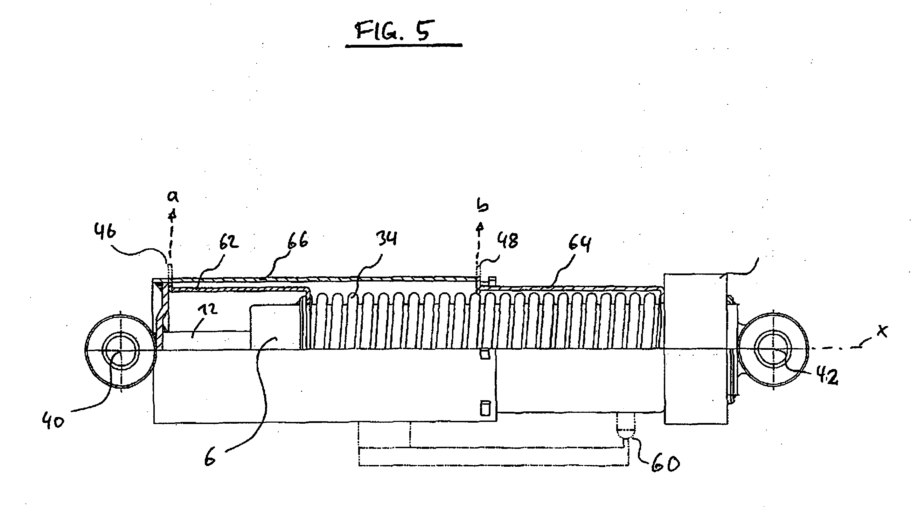

In Figur 5 ist eine weitere bevorzugte Ausführungsform der erfindungsgemäßen Stabilisierungsvorrichtung dargestellt. Im Gegensatz zu den in den Figuren 2 und 3 dargestellten Stabilisierungsvorrichtungen ist das Federelement 34 nicht in einem separaten Gehäuse angeordnet, sondern umgibt den Hohlzylinder 6. An dem ersten Ende 22 der Kolbeneinheit 4 ist ein erstes Halteelement 62 angeordnet, welches bei Verlagerung der Kolbeneinheit 4 in Richtung der eingeschobenen Position mit dem ersten Ende 36 des Federelements 34 zusammenwirkt und dieses komprimiert. Gleichfalls ist ein zweites Halteelement 64 vorgesehen, welches bei einer Verlagerung der Kolbeneinheit 4 in Richtung der ausgezogenen Position mit einem zweiten Ende 38 des Federelements 34 zusammenwirkt und dieses komprimiert. Das zweite Halteelement 64 ist mittelbar über das Stoßdämpferaußenrohr 66 mit dem ersten Ende 22 der Kolbeneinheit 4 verbunden.

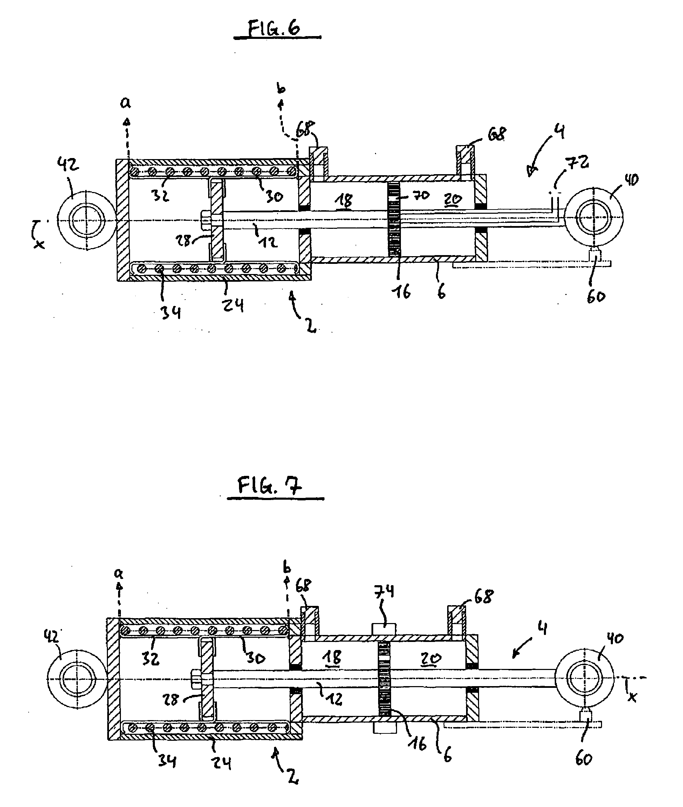

In Figur 6 ist eine weitere bevorzugte Ausführungsform der erfindungsgemäßen Stabilisierungsvorrichtung dargestellt. Bei dieser sind der erste Fluidanschluss 8 und der zweite Fluidanschluss 10 durch Verschlüsse 68 im Wesentlichen fluiddicht verschlossen. In dem Kolben 16 der Kolbeneinheit 4 ist eine Durchgangsöffnung 70 vorgesehen, durch welche das Fluid zwischen der ersten Kammer 18 und der zweiten Kammer 20 bei Bewegung der Kolbeneinheit 4 strömen kann. In dem Hohlzylinder 6 bzw. der ersten und zweiten Kammer 18, 20 ist besonders vorzugsweise ein Fluid vorgesehen, dessen Viskosität durch äußere Einflüsse veränderbar ist. Dieses kann beispielsweise eine magnetorheologische oder eine elektrorheologische Flüssigkeit sein, die bei Aktivierung eines magnetischen oder elektrischen Feldes an Zähigkeit bis hin zum festen Zustand zunimmt. Bei einer Rückwärtsfahrt des Fahrzeugs können somit über elektrische Leitungen 72 dem Kolben 16 oder benachbarten Teilen eine elektrische Spannung derart zugeführt werden, dass sich ein elektrisches Feld auf das Fluid in dem Hohlzylinder 6 überträgt, wodurch diese Fluid an Zähigkeit zunimmt. Hierdurch wird eine Bewegung der Kolbeneinheit entlang der Längsachse X verhindert.

In Figur 7 ist eine weitere bevorzugte, beispielhafte Ausführungsform der erfindungsgemäßen Stabilisierungsvorrichtung dargestellt. Zur Festlegung der Kolbeneinheit 4 in der Ursprungsposition bzw. Nullstellung ist außerhalb des Hohlzylinders bzw. am Außenumfang desselben eine Elektromagnet 74 vorgesehen. Dieser ist in axialer Richtung X derart positioniert, dass er benachbart zu dem Kolben 16 angeordnet ist und somit bei Aktivierung der Kolben 16 auf Höhe des Elektromagneten 74 gehalten wird. Es versteht sich, dass auch eine Kombination der in den Figuren 6 und 7 dargestellten Ausführungsform möglich ist.

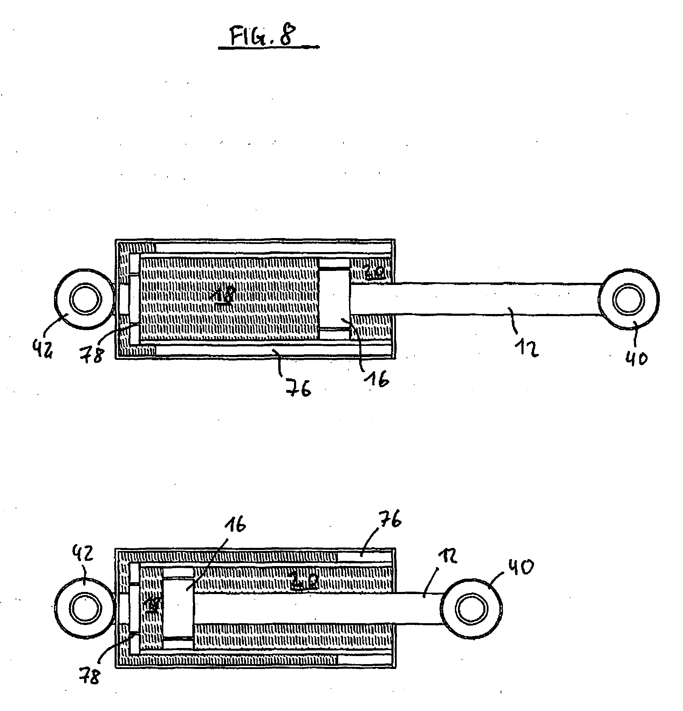

In Figur 8 ist eine bevorzugte Ausführungsform eines Hohlzylinders 6 mit einem darin angeordneten Kolben 16 dargestellt. Wie ersichtlich, ist der Hohlzylinder 6 im Wesentlichen doppelwandig ausgebildet, um somit eine dritte Kammer 76 zu konstituieren. Zwischen der ersten bzw. zweiten Kammer 18, 20 und der dritten Kammer 76 ist eine Bodenventilanordnung 78 vorgesehen, durch welche Fluid bei Verschiebung der Kolbeneinheit 4 in den Hohlzylinder 6 hinein in die Kammer 76 zum Volumenausgleich überströmen kann. Die Bodenventilanordnung 78 ist über die Steuer- bzw. Regeleinrichtung derart steuerbar, dass diese den Fluidfluss zwischen der dritten Kammer 76 und der ersten Kammer 18 sperren kann. In diesem Zustand ist eine Veränderung der Lage der Kolbenstange 12 bzw. der Kolbeneinheit 4 nicht mehr möglich, sodass in diesem Zustand die erfindungsgemäße Stabilisierungsvorrichtung als Lenksperre dient. Die in Figur 8 dargestellte Ausführungsform kann in Kombination mit einer der in den Figuren 2 - 5 dargestellten Vorspanneinrichtungen genutzt werden.

### Bezugszeichenliste:

- 2: Hohlzylindereinheit
- 4: Kolbeneinheit
- 6: Hohlzylinder
- 8: erster Fluidanschluss
- 10: zweiter Fluidanschluss
- 12: Kolbenstange
- 14: Dichtung
- 16: Kolben
- 18: erste Kammer
- 20: zweite Kammer
- 22: erstes Ende
- 24: Gehäuse
- 26: zweites Ende
- 28: Halteabschnitt
- 30: erstes Halteelement
- 32: zweites Halteelement
- 34: Federelement
- 36: erstes Ende
- 38: zweites Ende
- 40: erstes Befestigungselement
- 42: zweites Befestigungselement
- 44: Ventilanordnung
- 46: erster Kontaktsensor

- 48: zweiter Kontaktsensor
- 50: Schalter
- 52: Schalter
- 54: Zweiwegeventil
- 56: Vierwegeventil
- 58: Fluidausgleichsbehälter
- 60: dritter Kontaktsensor
- 62: erstes Halteelement
- 64: zweites Halteelement
- 66: Stoßdämpferaußenrohr
- 68: Verschluss
- 70: Durchgangsöffnung
- 72: Elektrische Leitungen
- 74: Elektromagnet
- 76: dritte Kammer
- 78: Bodenventilanordnung
- 100: Achskörper
- 102: Lenkgabel
- 104: Rad
- 106: Spurstange
- 108: erstes Anschlusselement
- 110: zweites anschlusselement
- 112: Stabilisierungsvorrichtung
- X: Längsachse
- Y: Längserstreckung
- V: Vorwärtsrichtung

## Patentansprüche

1. Stabilisierungsvorrichtung für Achsen von Fahrzeugen, wie Kraftfahrzeugen, Anhängern, Sattelaufliegern oder dergleichen, umfassend
eine Hohlzylindereinheit (2), die einen Hohlzylinder (6) mit einem Fluid darin aufweist,
eine Kolbeneinheit (4), die einen Kolben (16) aufweist, welcher im Hohlzylinder (6) angeordnet und diesen in zumindest zwei Kammern (18, 20) trennt, wobei die Kolbeneinheit (4) in Bezug auf die Hohlzylindereinheit (2) verschieblich ist, indem sie von einer Ursprungsposition in eine ausgelenkte Position verlagerbar ist,
eine Vorspanneinrichtung, welche die Kolbeneinheit (4) in Richtung der Ursprungsposition spannt,
eine Steuer- bzw. Regeleinrichtung, welche den Fluidfluß in die/aus den Kammern (18, 20) steuert bzw. regelt, und
eine Sensoreinrichtung, welche die Position der Kolbeneinheit (4) erfasst, wobei die Steuer- bzw. Regeleinrichtung eine Ventilanordnung (44) aufweist, mittels welcher der Fluidfluß in die/aus den Kammern (18, 20) zugelassen oder verhindert werden kann, **dadurch gekennzeichnet, dass** die Steuer- bzw. Regeleinrichtung den Fluidfluß in die/aus den Kammern (18, 20) nur verhindern kann, wenn die Sensoreinrichtung die Ursprungsposition der Kolbeneinheit (4) erfasst.

2. Stabilisierungsvorrichtung nach Anspruch 1, wobei die ausgelenkte Position eine eingeschobene und eine ausgezogene Position umfasst.

3. Stabilisierungsvorrichtung nach einem der vorhergehenden Ansprüche, wobei die Steuer- bzw. Regeleinrichtung eine Fluidpumpe aufweist, die ausgelegt ist, wahlweise einer der Kammern (18, 20) Fluid zuzuführen, um die Kolbeneinheit (4)in eine vorgegebene Position zu verlagern.

4. Stabilisierungsvorrichtung nach einem der vorhergehenden Ansprüche, wobei die Sensoreinrichtung ausgelegt ist, die Nullstellung der Vorspanneinrichtung zu erfassen.

5. Stabilisierungsvorrichtung nach einem der vorhergehenden Ansprüche, wobei die Vorspanneinrichtung ein Federelement (34) aufweist, welches vorzugsweise als Schraubenfeder ausgebildet ist.

6. Stabilisierungsvorrichtung nach Anspruch 5, wobei das Federelement (34) in jeder der ausgelenkten Positionen auf Druck beansprucht wird.

7. Stabilisierungsvorrichtung nach einem der Ansprüche 5 oder 6, wobei in der eingeschobenen Position die Lage eines ersten Endes (36) des Federelements (34) in Bezug auf die Hohlzylindereinheit (2) und in der ausgezogenen Position die Lage eines zweiten Endes (38) des Federelements (34) in Bezug auf die Hohlzylindereinheit (2) verlagert ist.

8. Stabilisierungsvorrichtung nach einem der vorhergehenden Ansprüche, wobei die Kolbeneinheit (4) eine Kolbenstange (12) aufweist, an welcher der Kolben (16) angeordnet ist und welche aus dem Hohlzylinder (6) zumindest einseitig herausragt.

9. Stabilisierungsvorrichtung nach Anspruch 8, wobei an dem herausragenden Bereich der Kolbenstange (12) ein Halteabschnitt (28) vorgesehen ist, welcher ausgelegt ist, bei Verlagerung der Kolbeneinheit (4) in Richtung der eingeschobenen Position mit einem ersten, mit der Vorspanneinrichtung in Eingriff stehenden Halteelement (30) und bei Verlagerung der Kolbeneinheit (4) in Richtung der ausgezogenen Position mit einem zweiten, mit der Vorspanneinrichtung in Eingriff stehenden Halteelement (32) zusammenzuwirken.

10. Stabilisierungsvorrichtung nach einem der vorhergehenden Ansprüche, wobei die Hohlzylindereinheit (2) ein Gehäuse (24) aufweist, in welchem die Vorspanneinrichtung aufgenommen ist und welches vorzugsweise koaxial zum Hohlzylinder (6) angeordnet ist.

11. Stabilisierungsvorrichtung nach Anspruch 10, wobei sich das Gehäuse (24) und der Hohlzylinder (6) zumindest teilweise überlappen.

12. Nachlauflenkachse von Fahrzeugen, wie Kraftfahrzeugen, Anhängern, Sattelaufliegern oder dergleichen, umfassend
einen Achskörper (100), an dessen Enden Räder (104) über Lenkgabeln (102) anordenbar sind,
eine Spurstange (106), über welche die Lenkgabeln (102) anlenkbar sind, und eine Stabilisierungsvorrichtung nach Anspruch 1, weiche zwischen dem Achskörper (100) und einem entsprechend den Rädern (104) auslenkbaren Teil, wie der Spurstange (106), wirksam ist.

## Claims

1. A stabilizing device for axles of vehicles, such as motor vehicles, trailers, semi-trailers, or the like, comprising
a hollow cylinder unit (2) which comprises a hollow cylinder (6) containing a fluid therein,
a piston unit (4) with a piston (16) which is arranged in the hollow cylinder (6) and divides the hollow cylinder into at least two chambers (18, 20), wherein the piston unit (4) can slide relative to the hollow cylinder unit (2) in that said piston unit (4) can be moved from an original position to a deflected position,
a pre-tensioning device which tensions the piston unit (4) in the direction of the original position,
a control or regulating device which controls or regulates the fluid flow into/out of the chambers (18, 20), and
a sensor device which detects the position of the piston unit (4),
wherein the control or regulating device comprises a valve arrangement (44) by means of which the fluid flow into/out of the chambers (18, 20) may be permitted or prevented,
**characterized in that**
the control or regulating device may prevent the fluid flow into/out of the chambers (18, 20) only when the sensor device detects the original position of the piston unit (4).

2. The stabilizing device according to claim 1, wherein the deflected position comprises a retracted and an extended position.

3. The stabilizing device according to any one of the preceding claims, wherein the control or regulating device comprises a fluid pump which is adapted to selectively feed fluid to one of the chambers (18, 20) in order to displace the piston unit (4) into a predetermined position.

4. The stabilizing device according to any one of the preceding claims, wherein the sensor device is adapted to detect the zero position of the pre-tensioning device.

5. The stabilizing device according to any one of the preceding claims, wherein the pre-tensioning unit comprises a spring element (34) which preferably is configured as a coil spring.

6. The stabilizing device according to claim 5, wherein the spring element (34) is subject to pressure load in each of the deflected positions.

7. The stabilizing device according to any one of claims 5 or 6, wherein in the retracted position the position of a first end (36) of the spring element (34) is displaced relative to the hollow cylinder unit (2), and in the extended position the position of a second end (38) of the spring element (34) is displaced relative to the hollow cylinder unit (2).

8. The stabilizing device according to any one of the preceding claims, wherein the piston unit (4) comprises a piston rod (12) at which the piston (16) is arranged and which at least at one end protrudes from the hollow cylinder (6).

9. The stabilizing device according to claim 8, wherein at the protruding portion of the piston rod (12) there is provided a holding section (28) which, when the piston unit (4) is displaced in the direction of the retracted position, is adapted to interact with a first holding element (30) which is in engagement with the pre-tensioning unit and, when the piston unit (4) is displaced in the direction of the extended position, is adapted to interact with a second holding element (32) which is in engagement with the pre-tensioning device.

10. The stabilizing device according to any one of the preceding claims, wherein the hollow cylinder unit (2) comprises a housing (24) in which the pre-tensioning device is accommodated and which preferably is arranged coaxially with respect to the hollow cylinder (6).

11. The stabilizing device according to claim 10, wherein the housing (24) and the hollow cylinder (6) overlap at least partially.

12. A steered trailing axle of vehicles, such as motor vehicles, trailers, semi-trailers or the like, comprising
an axle body (100) at whose ends wheels (104) can be arranged via steering forks (102),
a tie rod (106) by means of which the steering forks (102) can be linked or coupled, and
a stabilizing device according to claim 1, which is effective between the axle body (100) and a part, such as the tie rod (106), which is deflectable in correspondence with the wheels (104).

## Revendications

1. Dispositif de stabilisation pour des essieux de véhicules, comme des véhicules automobiles, des remorques, des semi-remorques ou similaires, comprenant
une unité à cylindre creux (2) qui comprend un cylindre creux (6) avec un fluide à l'intérieur,
une unité à piston (4) qui comprend un piston (16), lequel est agencé dans le cylindre creux (6) et sépare celui-ci en au moins deux chambres (18, 20), ladite unité à piston (4) étant mobile par rapport à l'unité à cylindre creux (2), en étant déplaçable depuis une position d'origine jusque dans une position écartée,
un système de précontrainte qui force l'unité à pistons (4) en direction de la position d'origine,
un système de commande ou de régulation, qui commande ou qui régule l'écoulement de fluide entrant/sortant des chambres (18, 20), et
un système à capteur qui détecte la position de l'unité à piston (4),
dans lequel le système de commande ou de régulation comprend un agencement formant valve (44) au moyen duquel l'écoulement de fluide entrant/sortant des chambres (18, 20) peut être autorisé ou empêché, **caractérisé en ce que**
le système de commande ou de régulation ne peut empêcher l'écoulement de fluide entrant/sortant des chambres (18, 20) que si le système capteur détecte la position d'origine de l'unité à piston (4).

2. Dispositif de stabilisation selon la revendication 1, dans lequel la position écartée inclut une position rétractée et une position déployée.

3. Dispositif de stabilisation selon l'une des revendications précédentes, dans lequel le système de commande ou de régulation comprend une pompe à fluide qui est conçue pour amener du fluide au choix à l'une des chambres (18, 20) pour amener l'unité à piston (4) dans une position prédéterminée.

4. Dispositif de stabilisation selon l'une des revendications précédentes, dans lequel le système capteur est conçu pour détecter la position de zéro du système de précontrainte.

5. Dispositif de stabilisation selon l'une des revendications précédentes, dans lequel le système de précontrainte comprend un élément de ressort (34) qui est de préférence réalisé comme un ressort hélicoïdal.

6. Dispositif de stabilisation selon la revendication 5, dans lequel l'élément de ressort (34) est sollicité en pression dans chacune des positions écartées.

7. Dispositif de stabilisation selon l'une des revendications 5 ou 6, dans lequel dans la position rétractée la situation d'une première extrémité (36) de l'élément ressort (34) est déplacée par rapport à l'unité à cylindre creux (2), et dans la position déployée la situation d'une seconde extrémité (38) de l'élément de ressort (34) est déplacée par rapport à l'unité à cylindre creux (2).

8. Dispositif de stabilisation selon l'une des revendications précédentes,
dans lequel l'unité à piston (4) comprend une tige de piston (12) sur laquelle est agencé le piston (16) et qui dépasse au moins d'un côté hors du cylindre creux (6).

9. Dispositif de stabilisation selon la revendication 8, dans lequel au niveau de la zone de la tige de piston (12) qui dépasse, il est prévu un tronçon de maintien (28) qui est conçu, en cas de déplacement de l'unité à piston (4) en direction de la position rétractée, pour coopérer avec un premier élément de maintien (30) qui se trouve en engagement avec le système de précontrainte et, en cas de déplacement de l'unité à piston (4) en direction de la position déployée, pour coopérer avec un second élément de maintien (32) qui se trouve en engagement avec le système de précontrainte.

10. Dispositif de stabilisation selon l'une des revendications précédentes, dans lequel l'unité à cylindre creux (2) comprend un boîtier (24) dans lequel est reçu le système de précontrainte et qui est de préférence agencé coaxialement au cylindre creux (6).

11. Dispositif de stabilisation selon la revendication 10, dans lequel le boîtier (24) et le cylindre creux (6) se chevauchent au moins partiellement.

12. Essieu directeur traîné de véhicules, comme des véhicules automobiles, des remorques, des semi-remorques ou similaires, comprenant
un corps d'essieu (100) aux extrémités duquel sont agencées des roues (104) au moyen de fourches directrices (102),
une bielle de direction (106) via laquelle les fourches directrices (102) peuvent être articulées, et un dispositif de stabilisation selon la revendication 1, qui est actif entre le corps d'essieu (100) et une partie, comme la bielle de direction (106), susceptible d'être écartée de manière correspondante aux roues (104).
